# FASCICULE DE BREVET EUROPEEN

(11) **EP 4 036 311 B1**
(45) Date de publication et mention de la délivrance du brevet: **27.09.2023**
(21) Numéro de dépôt: 22153207.0
(22) Date de dépôt: 25.01.2022
(51) Int. Cl.: E01H 5/06

(54) **REMORQUE DE DÉNEIGEMENT À VERROUILLAGE DE TIMON SÉCURISÉ**
SCHNEERÄUMANHÄNGER MIT GESICHERTER VERRIEGELUNG DER DEICHSEL
SNOW-REMOVAL TRAILER WITH SECURE DRAWBAR LOCKING

(30) Priorité: 28.01.2021 FR 2100790
(43) Date de publication de la demande: 03.08.2022
(73) Titulaire: SOVIAR, 74190 Passy (FR)
(72) Inventeur: BENEDETTI, Michel, 74190 Passy (FR)
(74) Mandataire: Cabinet Poncet

(56) Documents cités:
- EP-A1- 3 196 361
- FR-A1- 2 492 331
- US-A- 4 902 030

## Description

### DOMAINE TECHNIQUE DE L'INVENTION

La présente invention concerne le déneigement des voies de circulation routières, et concerne plus particulièrement une remorque de déneigement destinée à être tractée par un véhicule à attelage de remorquage.

Pour déneiger simultanément plusieurs files d'une voie de circulation à l'aide d'un seul véhicule tracteur, on connaît une remorque de déneigement telle que décrite dans le document EP 3 196 361 A1, comportant :
- un châssis s'allongeant longitudinalement selon une direction de châssis et comportant une lame de déneigement,
- au moins une roue agencée pour porter le châssis sur un sol, un essieu de ladite roue étant sélectivement orientable par des moyens d'orientation entre une première position de roue, dans laquelle un axe de l'essieu autour duquel tourne la roue est perpendiculaire à la direction de châssis, et au moins une deuxième position de roue, dans laquelle l'axe de l'essieu autour duquel tourne la roue fait avec la direction de châssis un angle d'essieu qui est différent de 90°,
- un timon d'attelage s'allongeant selon une direction de timon entre des première et deuxième extrémités de timon,
- à la première extrémité de timon, des premiers moyens de connexion autorisant une liaison librement pivotante à l'attelage de remorquage du véhicule tracteur autour d'une première direction de pivotement sensiblement perpendiculaire au plan défini par la direction de châssis et l'axe de l'essieu autour duquel tourne ladite au moins une roue,
dans laquelle :
- à la deuxième extrémité de timon, le timon d'attelage est articulé au châssis à pivotement autour d'une deuxième direction de pivotement sensiblement perpendiculaire au plan défini par la direction de châssis et l'axe de l'essieu autour duquel tourne ladite au moins une roue,
- des moyens de pivotement permettent de sélectivement déplacer à pivotement le châssis de remorque et le timon d'attelage l'un par rapport à l'autre, et de fixer la position angulaire relative du châssis de remorque et du timon d'attelage, entre une position de transport, dans laquelle la direction de châssis et la direction de timon sont sensiblement parallèles, et au moins une position de déneigement, dans laquelle la direction de châssis et la direction de timon font un angle non nul entre elles,
- on prévoit une barre de verrouillage de timon, ayant une longueur fixe, dont une extrémité peut être fixée sur le timon d'attelage et dont l'autre extrémité peut être fixée sur le châssis pour immobiliser le timon d'attelage sur le châssis en position de transport.

Un inconvénient d'une telle remorque est qu'elle présente de nombreux degrés de liberté, ce qui rend complexe son utilisation pour l'opérateur, lequel doit déjà gérer un grand nombre de choses, parmi lesquelles la bonne tenue et la trajectoire du véhicule tracteur sur la chaussée, la trajectoire de la remorque de déneigement par rapport au bord de la chaussée, l'orientation de la lame de déneigement que porte généralement le véhicule tracteur, les éventuelles substances à projeter sur la chaussée (sel, sable, etc.), la présence éventuelle d'obstacles sur la chaussée ou au bord de celle-ci, etc.

Le document US 4,902,030 A décrit une remorque comportant un timon présentant une orientation fixe par rapport au châssis de la remorque.

Le document FR 2 492 331 A1 décrit une remorque pour une utilisation agricole comportant un timon monté pivotant par rapport au châssis de la remorque autour d'un axe vertical.

### EXPOSE DE L'INVENTION

Un problème proposé par la présente invention est de simplifier la manoeuvre d'une remorque de déneigement telle que décrite précédemment, et de limiter les risque d'une mauvaise manoeuvre pouvant mener à une dégradation de la remorque de déneigement.

Pour atteindre ces objets ainsi que d'autres, l'invention propose une remorque de déneigement destinée à être tractée par un véhicule tracteur à attelage de remorquage, ladite remorque de déneigement comportant :
- un châssis s'allongeant longitudinalement selon une direction de châssis et comportant une lame de déneigement,
- au moins une roue agencée pour porter le châssis sur un sol, un essieu de ladite roue étant sélectivement orientable par des moyens d'orientation entre une première position de roue, dans laquelle un axe de l'essieu autour duquel tourne la roue est perpendiculaire à la direction de châssis, et au moins une deuxième position de roue, dans laquelle l'axe de l'essieu autour duquel tourne la roue fait avec la direction de châssis un angle d'essieu qui est différent de 90°,
- un timon d'attelage s'allongeant selon une direction de timon entre des première et deuxième extrémités de timon,
- à la première extrémité de timon, des premiers moyens de connexion autorisant une liaison librement pivotante à l'attelage de remorquage du véhicule tracteur autour d'une première direction de pivotement sensiblement perpendiculaire au plan défini par la direction de châssis et l'axe de l'essieu autour duquel tourne ladite au moins une roue,
dans laquelle :
- à la deuxième extrémité de timon, le timon d'attelage est articulé au châssis à pivotement autour d'une deuxième direction de pivotement sensiblement perpendiculaire au plan défini par la direction de châssis et l'axe de l'essieu autour duquel tourne ladite au moins une roue,
- des moyens de pivotement permettent de sélectivement déplacer à pivotement le châssis de remorque et le timon d'attelage l'un par rapport à l'autre, et de fixer la position angulaire relative du châssis de remorque et du timon d'attelage, entre une position de transport, dans laquelle la direction de châssis et la direction de timon sont sensiblement parallèles, et au moins une position de déneigement, dans laquelle la direction de châssis et la direction de timon font un angle non nul entre elles,
- on prévoit une barre de verrouillage de timon, ayant une longueur fixe, dont une extrémité peut être fixée sur le timon d'attelage et dont l'autre extrémité peut être fixée sur le châssis pour immobiliser le timon d'attelage sur le châssis en position de transport ;
selon l'invention :
- la remorque de déneigement comporte des moyens de détection, aptes à générer un signal de fixation lorsque la barre de verrouillage de timon est fixée au timon d'attelage et au châssis,
- la remorque de déneigement comporte des premiers moyens d'inhibition aptes à inhiber les moyens de pivotement,
- les premiers moyens d'inhibition et les moyens de détection sont agencés de telle sorte que lorsque les moyens de détection génèrent un signal de fixation, les premiers moyens d'inhibition empêchent tout actionnement des moyens de pivotement.

Avec un tel dispositif, lorsque la barre de verrouillage de timon est présente, on empêche automatiquement tout actionnement des moyens de pivotement. Cela limite les risques de dégradation involontaire de la remorque de déneigement par un actionnement des moyens de pivotement en présence de la barre de verrouillage de timon. Ainsi, une fois la barre de verrouillage de timon mise en place, l'opérateur n'a plus le souci de la gestion des moyens de pivotement.

Avantageusement, afin d'encore mieux limiter les risques d'une mauvaise manipulation, on peut prévoir que :
- les premiers moyens d'inhibition sont aptes à inhiber les moyens d'orientation,
- les premiers moyens d'inhibition et les moyens de détection sont agencés de telle sorte que lorsque les moyens de détection génèrent un signal de fixation, les premiers moyens d'inhibition empêchent tout actionnement des moyens d'orientation.

Ainsi, une fois la barre de verrouillage de timon mise en place, l'opérateur n'a plus le souci de la gestion des moyens d'orientation.

De préférence, afin d'encore mieux limiter les risques d'une mauvaise manipulation, on peut prévoir que :
- la lame de déneigement est articulée à pivotement sur le châssis et déplaçable, par des moyens de déplacement, autour d'une direction de pivotement de lame sensiblement parallèle à la direction de châssis, entre une position de repos et une position de travail,
- la remorque de déneigement comporte des deuxièmes moyens d'inhibition aptes à inhiber les moyens de déplacement,
- les deuxièmes moyens d'inhibition et les moyens de détection sont agencés de telle sorte que lorsque les moyens de détection génèrent un signal de fixation, les deuxièmes moyens d'inhibition empêchent tout actionnement des moyens de déplacement.

Ainsi, une fois la barre de verrouillage de timon mise en place, l'opérateur n'a également plus le souci de la gestion des moyens de déplacement.

Avantageusement, les moyens de détection peuvent comporter au moins un capteur de proximité apte à détecter la présence d'une extrémité de la barre de verrouillage de timon sur le châssis et/ou sur le timon. Un tel capteur permet de détecter automatiquement la présence de la barre de verrouillage de timon, sans manipulation de la part de l'opérateur autre que la simple mise en place de la barre de verrouillage de timon.

De préférence, le capteur de proximité est un capteur inductif ou un capteur capacitif. Un tel capteur est à la fois simple et suffisamment robuste pour fonctionner de façon satisfaisante dans l'environnement de travail souvent compliqué des engins de déneigement (faibles températures, précipitations extérieures, etc.).

Selon un autre aspect, la présente invention propose un ensemble de déneigement comportant :
- un véhicule tracteur,
- une remorque de déneigement telle que précédemment décrite,
- des moyens d'alarme, aptes à générer un signal d'alarme perceptible par un opérateur situé dans la cabine de pilotage du véhicule tracteur, de préférence un signal d'alarme visuel, lorsque les moyens de détection génèrent un signal de fixation.

L'opérateur situé dans la cabine de pilotage du véhicule tracteur est ainsi averti de la présence de la barre de verrouillage de timon. Il convient de préférer un signal d'alarme visuel, et surtout pas sonore, afin de ne pas troubler l'opérateur qui doit gérer un grand nombre de choses.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue schématique de dessus d'un ensemble de déneigement comprenant une remorque de déneigement selon la présente invention, dont ladite au moins une roue est en première position de roue ;
[Fig.2] La figure 2 est une vue schématique de dessus d'une partie de la remorque de déneigement de l'ensemble de déneigement de la figure 1 ;
[Fig.3] La figure 3 est une vue schématique de dessus de l'ensemble de déneigement avec la remorque de déneigement dont ladite au moins une roue est en deuxième position de roue ;
[Fig.4] La figure 4 est une vue schématique de dessus d'une partie de la remorque de déneigement de l'ensemble de déneigement de la figure 3 ; et
[Fig.5] La figure 5 est une vue schématique illustrant le fonctionnement des moyens de détection, des moyens d'inhibition et des moyens d'alarme.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

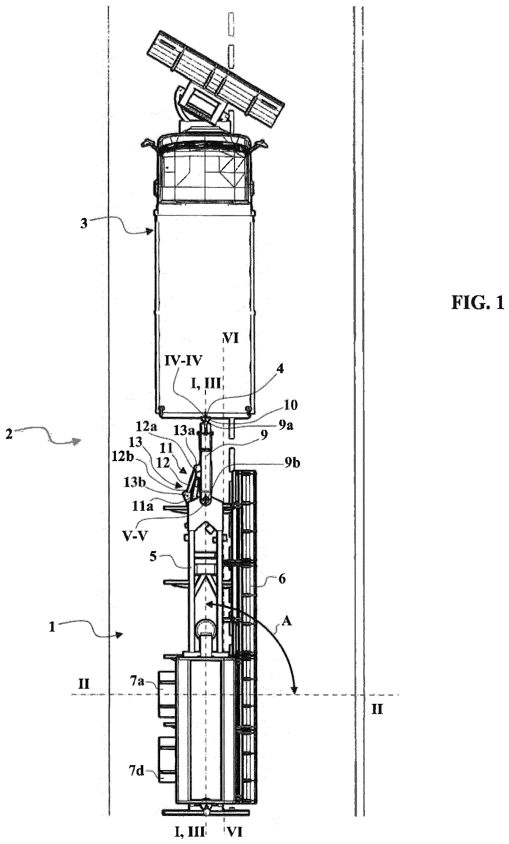

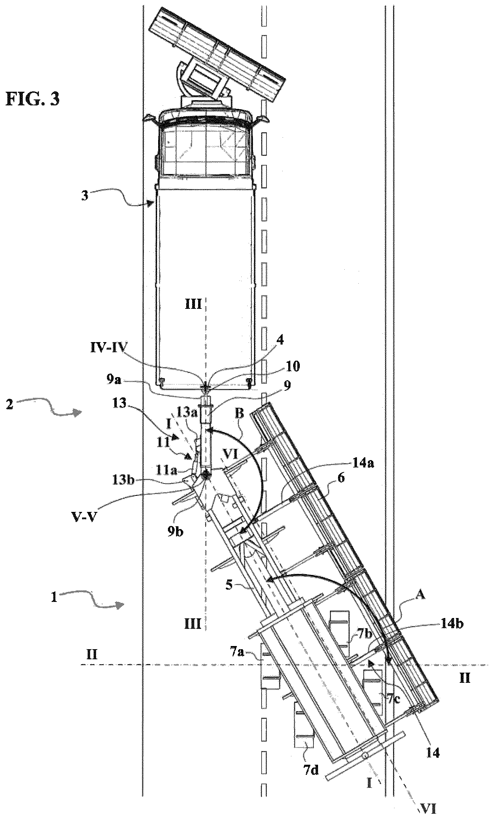

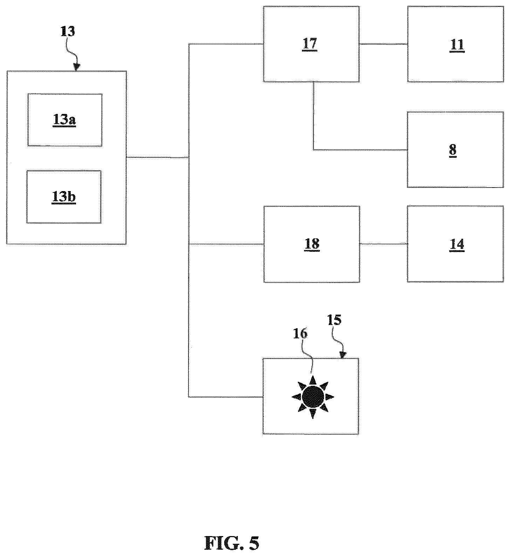

Sur les figures 1 à 5 est illustré un exemple de mode de réalisation de remorque de déneigement 1 selon la présente invention, utilisée dans un ensemble de déneigement 2 sur les figures 1 et 3 comprenant en outre un véhicule tracteur 3 la tractant.

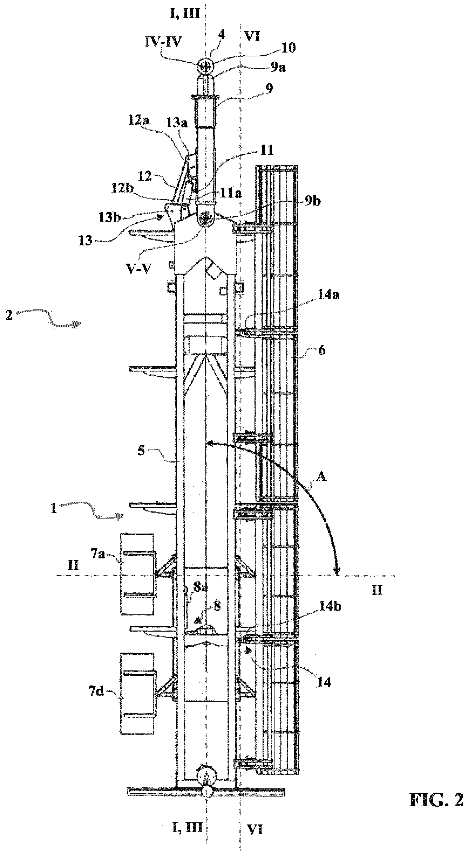

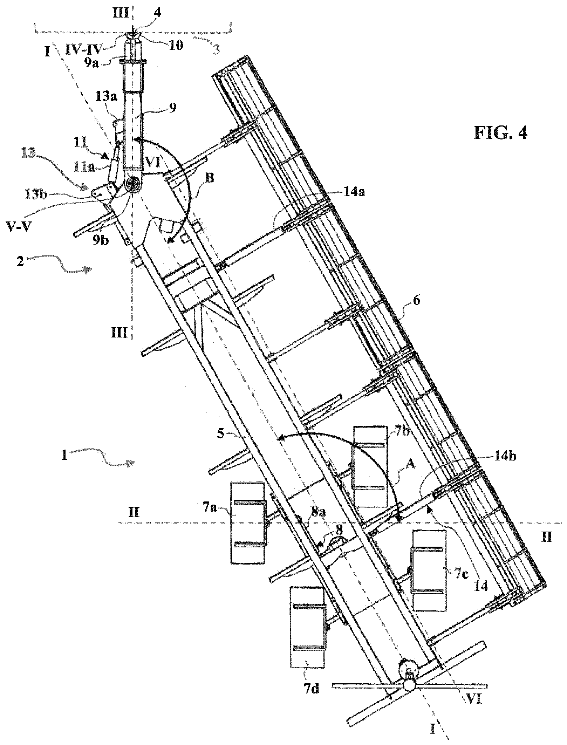

La remorque de déneigement 1 est du type pivotante entre une position de transport (figures 1 et 2) et une position de déneigement (figures 3 et 4), comme décrite dans le document EP 3 196 361 A1.

La remorque de déneigement 1 est destinée à être tractée par le véhicule tracteur 3 à attelage de remorquage 4. Ladite remorque de déneigement 1 comporte un châssis 5 s'allongeant longitudinalement selon une direction de châssis I-I et comportant une lame de déneigement 6.

Quatre roues 7a à 7d sont agencées pour porter le châssis 5 sur un sol, les essieux desdites roues 7a à 7d étant sélectivement orientables par des moyens d'orientation 8 entre une première position de roue (figures 1 et 2), dans laquelle les axes d'essieux autour desquels tournent les roues 7a à 7d sont perpendiculaires à la direction de châssis I-I, et au moins une deuxième position de roue (figures 3 et 4), dans laquelle les axes des essieux autour desquels tournent les roues 7a à 7d font avec la direction de châssis I-I un angle d'essieu A qui est différent de (supérieur à) 90°.

Ici, les axes d'essieux des roues 7a à 7d sont parallèles à une direction d'essieux II-II.

Un timon d'attelage 9 s'allonge selon une direction de timon III-III entre des première 9a et deuxième 9b extrémités de timon.

A la première extrémité de timon 9a, des premiers moyens de connexion 10 autorisent une liaison librement pivotante à l'attelage de remorquage 4 du véhicule tracteur 3 autour d'une première direction de pivotement IV-IV sensiblement perpendiculaire au plan défini par la direction de châssis I-I et les axes d'essieux autour desquels tournent lesdites roues 7a à 7d (donc perpendiculaire au plan défini par la direction de châssis I-I et la direction d'essieux II-II).

A la deuxième extrémité de timon 9b, le timon d'attelage 9 est articulé au châssis 5 à pivotement autour d'une deuxième direction de pivotement V-V sensiblement perpendiculaire au plan défini par la direction de châssis I-I et les axes des essieux autour desquels tournent les roues 7a à 7d (donc perpendiculaire au plan défini par la direction de châssis I-I et la direction d'essieux II-II).

Des moyens de pivotement 11 permettent de sélectivement déplacer à pivotement le châssis 5 de remorque 1 et le timon d'attelage 9 l'un par rapport à l'autre, et de fixer la position angulaire relative du châssis 5 de remorque 1 et du timon d'attelage 9, entre une position de transport (figures 1 et 2), dans laquelle la direction de châssis I-I et la direction de timon III-III sont sensiblement parallèles, et au moins une position de déneigement (figures 3 et 4), dans laquelle la direction de châssis I-I et la direction de timon III-III font un angle B non nul entre elles.

On voit plus particulièrement sur les figures 2 et 4 que les moyens d'orientation 8 comprennent notamment un vérin hydraulique 8a à double effet, tandis que les moyens de pivotement 11 comprennent notamment un vérin hydraulique 11a à double effet.

On voit plus particulièrement sur la figure 2 qu'il est prévu une barre de verrouillage de timon 12, ayant une longueur fixe, dont une extrémité 12a peut être fixée sur le timon d'attelage 9 et dont l'autre extrémité 12b peut être fixée sur le châssis 5 pour immobiliser le timon d'attelage 9 sur le châssis 5 en position de transport (figures 1 et 2).

La remorque de déneigement 1 comporte des moyens de détection 13, aptes à générer un signal de fixation lorsque la barre de verrouillage de timon 12 est fixée au timon d'attelage 9 et au châssis 5.

Dans le cas présent, les moyens de détection 13 comportent un premier capteur de proximité 13a apte à détecter la présence de l'extrémité 12a de la barre de verrouillage de timon 12 sur le timon d'attelage 9, et un deuxième capteur de proximité 13b apte à détecter la présence de l'extrémité 12b de la barre de verrouillage de timon 12 sur le châssis 5. Lorsque les premier et deuxième capteurs 13a et 13b détectent respectivement la présence des extrémités 12a et 12b de la barre de verrouillage de timon 12, les moyens de détection 13 émettent un signal de fixation de la barre de verrouillage de timon 12.

Les capteurs de proximité 13a et 13b peuvent être par exemple des capteurs inductifs ou des capteurs capacitifs.

Dans le cas où la barre de verrouillage de timon 12 est articulée de façon non détachable sur le châssis 5 (respectivement sur le timon d'attelage 9) selon son extrémité 12a (respectivement selon son extrémité 12b), les moyens de détection 13 peuvent ne comprendre qu'un unique capteur de proximité sur le timon d'attelage 9 (respectivement sur le châssis 5), apte à détecter la présence de l'extrémité 12a de la barre de verrouillage de timon 12 sur le timon d'attelage 9 (respectivement apte à détecter la présence de l'extrémité 12b de la barre de verrouillage de timon 12 sur le châssis 5).

La remorque de déneigement 1 comporte aussi des premiers moyens d'inhibition 17 aptes à inhiber les moyens de pivotement 11. Les premiers moyens d'inhibition 17 et les moyens de détection 13 sont agencés de telle sorte que lorsque les moyens de détection 13 génèrent un signal de fixation, les premiers moyens d'inhibition 17 empêchent tout actionnement des moyens de pivotement 11.

Dans le cas présent, les premiers moyens d'inhibition 17 sont également aptes à inhiber les moyens d'orientation 8. Les premiers moyens d'inhibition 17 et les moyens de détection 13 sont agencés de telle sorte que lorsque les moyens de détection 13 génèrent un signal de fixation, les premiers moyens d'inhibition 17 empêchent tout actionnement des moyens d'orientation 8.

La lame de déneigement 6 est articulée à pivotement sur le châssis 5 et déplaçable, par des moyens de déplacement 14 (comprenant deux vérins hydrauliques 14a et 14b), autour d'une direction de pivotement de lame VI-VI sensiblement parallèle à la direction de châssis I-I, entre une position de repos (figures 1 et 2) et une position de travail (figures 3 et 4). En position de travail, la lame de déneigement 6 peut venir au contact de la chaussée pour racler la neige. En position de repos, la lame de déneigement 6 est élevée à l'écart de la chaussée.

La remorque de déneigement 1 comporte des deuxièmes moyens d'inhibition 18 aptes à inhiber les moyens de déplacement 14. Les deuxièmes moyens d'inhibition 18 et les moyens de détection 13 sont agencés de telle sorte que lorsque les moyens de détection 13 génèrent un signal de fixation, les deuxièmes moyens d'inhibition 18 empêchent tout actionnement des moyens de déplacement 14.

Afin que l'opérateur pilotant l'ensemble de déneigement 2, situé dans la cabine de pilotage du véhicule tracteur 3, soit informé de la présence (ou non) de la barre de verrouillage de timon 12, on prévoit des moyens d'alarme 15, aptes à générer un signal d'alarme perceptible par l'opérateur situé dans la cabine de pilotage du véhicule tracteur 3 lorsque les moyens de détection 13 génèrent un signal de fixation. Le signal d'alarme est un signal visuel tel qu'un témoin lumineux 16 fixe ou clignotant.

Le fonctionnement de la présente invention va désormais être explicité en lien avec les figures 1 à 5.

Lorsque la remorque de déneigement 1 est amenée sur une chaussée à déneiger, elle est en position de transport telle qu'illustrée sur les figures 1 et 2.

La barre de verrouillage de timon 12 immobilise le timon d'attelage 9 par rapport au châssis 5. Les capteurs de proximité 13a et 13b détectent les extrémités 12a et 12b de la barre de verrouillage de timon 12, de sorte que les moyens de détection 13 génèrent un signal de fixation. En conséquence, les premiers moyens d'inhibition 17 empêchent tout actionnement des moyens de pivotement 11 (et ici empêchent également tout actionnement des moyens d'orientation 8), et les deuxièmes moyens d'inhibition 18 empêchent tout actionnement des moyens de déplacement 14. L'opérateur est tenu averti de la présence de la barre de verrouillage de timon 12 par les moyens d'alarme 15 qui génèrent un signal d'alarme. En pratique, le signal d'alarme consiste en l'allumage d'un témoin lumineux 16 de façon fixe ou clignotante.

Lorsqu'il souhaite utiliser la remorque de déneigement 1 pour déneiger la chaussée, l'opérateur commence par retirer la barre de verrouillage de timon 12. Les capteurs de proximité 13a et 13b, ne détectent alors plus les extrémités 12a et 12b de la barre de verrouillage de timon 12, et les moyens de détection 13 ne génèrent plus de signal de fixation. Les premiers 17 et deuxièmes 18 moyens d'inhibition n'empêchent alors plus l'actionnement des moyens de pivotement 11, des moyens d'orientation 8 et des moyens de déplacement 14. Ceci est perceptible en cabine du véhicule tracteur 3 par l'extinction du témoin lumineux 16 des moyens d'alarme 15.

L'opérateur peut alors actionner en toute sécurité les moyens de pivotement 11, les moyens d'orientation 8 et les moyens de déplacement 14 pour amener la remorque de déneigement 1 dans une position de déneigement telle qu'illustrée sur les figures 3 et 4.

Une fois le déneigement effectué, l'opérateur actionne les moyens de pivotement 11, les moyens d'orientation 8 et les moyens de déplacement 14 pour ramener la remorque de déneigement 1 dans la position de transport telle qu'illustrée sur les figures 1 et 2.

Pour sécuriser la remorque de déneigement 1 lors de sa circulation, l'opérateur remet en place la barre de verrouillage de timon 12 en attachant ses première et deuxième extrémités 12a et 12b respectivement au timon d'attelage 9 et au châssis 5. Grâce aux moyens de détection 13 et aux premiers 17 et deuxième 18 moyens d'inhibition, la simple mise en place de la barre de verrouillage de timon 12 a pour effet d'empêcher tout actionnement ultérieur des moyens de pivotement 11, des moyens d'orientation 8 et des moyens de déplacement 14. L'opérateur dans la cabine de pilotage du véhicule tracteur 3 est informé que ces inhibitions sont actives par le témoin lumineux 16 des moyens d'alarme 15 qui s'allume : l'opérateur sait qu'il peut alors rouler en toute sérénité sur la chaussée, sans risquer un déploiement intempestif de la remorque de déneigement 1 vers une position de déneigement.

A noter qu'une remorque de déneigement 1 peut comporter des premiers moyens d'inhibition 17 sans obligatoirement comporter en outre des deuxièmes moyens d'inhibition 18.

La présente invention n'est pas limitée aux modes de réalisation qui ont été explicitement décrits, mais elle en inclut les diverses variantes et généralisations contenues dans le domaine des revendications ci-après.

## Revendications

1. Remorque de déneigement (1) destinée à être tractée par un véhicule tracteur (3) à attelage de remorquage (4), ladite remorque de déneigement (1) comportant :
- un châssis (5) s'allongeant longitudinalement selon une direction de châssis (I-I) et comportant une lame de déneigement (6),
- au moins une roue (7a-7d) agencée pour porter le châssis (5) sur un sol, un essieu de ladite roue (7a-7d) étant sélectivement orientable par des moyens d'orientation (8) entre une première position de roue, dans laquelle un axe de l'essieu autour duquel tourne la roue (7a-7d) est perpendiculaire à la direction de châssis (I-I), et au moins une deuxième position de roue, dans laquelle l'axe de l'essieu autour duquel tourne la roue (7a-7d) fait avec la direction de châssis (I-I) un angle d'essieu (A) qui est différent de 90°,
- un timon d'attelage (9) s'allongeant selon une direction de timon (III-III) entre des première (9a) et deuxième (9b) extrémités de timon,
- à la première extrémité de timon (9a), des premiers moyens de connexion (10) autorisant une liaison librement pivotante à l'attelage de remorquage (4) du véhicule tracteur (3) autour d'une première direction de pivotement (IV-IV) sensiblement perpendiculaire au plan défini par la direction de châssis (I-I) et l'axe de l'essieu autour duquel tourne ladite au moins une roue (7a-7d),
dans laquelle :
- à la deuxième extrémité de timon (9b), le timon d'attelage (9) est articulé au châssis (5) à pivotement autour d'une deuxième direction de pivotement (V-V) sensiblement perpendiculaire au plan défini par la direction de châssis (I-I) et l'axe de l'essieu autour duquel tourne ladite au moins une roue (7a-7d),
- des moyens de pivotement (11) permettent de sélectivement déplacer à pivotement le châssis (5) de remorque (1) et le timon d'attelage (9) l'un par rapport à l'autre, et de fixer la position angulaire (B) relative du châssis (5) de remorque (1) et du timon d'attelage (9), entre une position de transport, dans laquelle la direction de châssis (I-I) et la direction de timon (III-III) sont sensiblement parallèles, et au moins une position de déneigement, dans laquelle la direction de châssis (I-I) et la direction de timon (III-III) font un angle (B) non nul entre elles,
- on prévoit une barre de verrouillage de timon (12), ayant une longueur fixe, dont une extrémité (12a) peut être fixée sur le timon d'attelage (9) et dont l'autre extrémité (12b) peut être fixée sur le châssis (5) pour immobiliser le timon d'attelage (9) sur le châssis (5) en position de transport,
**caractérisée en ce que** :
- la remorque de déneigement (1) comporte des moyens de détection (13), aptes à générer un signal de fixation lorsque la barre de verrouillage de timon (12) est fixée au timon d'attelage (9) et au châssis (5),
- la remorque de déneigement (1) comporte des premiers moyens d'inhibition (17) aptes à inhiber les moyens de pivotement (11),
- les premiers moyens d'inhibition (17) et les moyens de détection (13) sont agencés de telle sorte que lorsque les moyens de détection (13) génèrent un signal de fixation, les premiers moyens d'inhibition (17) empêchent tout actionnement des moyens de pivotement (11).

2. Remorque de déneigement (1) selon la revendication 1, **caractérisée en ce que** :
- les premiers moyens d'inhibition (17) sont aptes à inhiber les moyens d'orientation (8),
- les premiers moyens d'inhibition (17) et les moyens de détection (13) sont agencés de telle sorte que lorsque les moyens de détection (13) génèrent un signal de fixation, les premiers moyens d'inhibition (17) empêchent tout actionnement des moyens d'orientation (8).

3. Remorque de déneigement (1) selon l'une des revendications 1 ou 2, **caractérisée en ce que** :
- la lame de déneigement (6) est articulée à pivotement sur le châssis (5) et déplaçable, par des moyens de déplacement (14), autour d'une direction de pivotement de lame (VI-VI) sensiblement parallèle à la direction de châssis (I-I), entre une position de repos et une position de travail,
- la remorque de déneigement (1) comporte des deuxièmes moyens d'inhibition (18) aptes à inhiber les moyens de déplacement (14),
- les deuxièmes moyens d'inhibition (18) et les moyens de détection (13) sont agencés de telle sorte que lorsque les moyens de détection (13) génèrent un signal de fixation, les deuxièmes moyens d'inhibition (18) empêchent tout actionnement des moyens de déplacement (14).

4. Remorque de déneigement (1) selon l'une quelconque des revendications 1 à 3, **caractérisée en ce que** les moyens de détection (13) comportent au moins un capteur de proximité (13a, 13b) apte à détecter la présence d'une extrémité (12a, 12b) de la barre de verrouillage de timon (12) sur le châssis (5) et/ou sur le timon d'attelage (9).

5. Remorque de déneigement (1) selon la revendication 4,
**caractérisée en ce que** le capteur de proximité (13a, 13b) est un capteur inductif ou un capteur capacitif.

6. Ensemble de déneigement (2) comportant :
- un véhicule tracteur (3),
- une remorque de déneigement (1) selon l'une quelconque des revendications 1 à 5,
- des moyens d'alarme (15), aptes à générer un signal d'alarme perceptible par un opérateur situé dans la cabine de pilotage du véhicule tracteur (3), de préférence un signal d'alarme visuel, lorsque les moyens de détection (13) génèrent un signal de fixation.

## Patentansprüche

1. Schneeräumanhänger (1), der dafür vorgesehen ist, von einem Zugfahrzeug (3) mit einer Anhängerkupplung (4) gezogen zu werden, wobei besagter Schneeräumanhänger (1) aufweist:
- einen Rahmen (5), der sich in Längsrichtung entlang einer Rahmenrichtung (I-I) erstreckt und ein Schneeräumschild (6) aufweist,
- mindestens ein Rad (7a-7d), das so angeordnet ist, dass es den Rahmen (5) auf einem Boden trägt, wobei eine Radachse des besagten Rades (7a-7d) durch Orientierungsmittel (8) selektiv zwischen einer ersten Radposition orientierbar ist, in der der Achsstift der Radachse, um die sich das Rad (7a-7d) dreht, senkrecht zur Rahmenrichtung (I-I) ist und mindestens einer zweiten Radposition orientierbar ist, in der der Achsstift der Radachse, um die sich das Rad (7a-7d) dreht, mit der Rahmenrichtung (I-I) einen Radachswinkel (A) einschließt, der von 90° verschieden ist,
- eine Kupplungsdeichsel (9), die sich entlang einer Deichselrichtung (III-III) zwischen dem ersten (9a) und dem zweiten (9b) Deichselende erstreckt,
- erste Verbindungsmittel (10) am ersten Deichselende (9a), die eine frei schwenkbare Verbindung mit der Anhängerkupplung (4) des Zugfahrzeugs (3) um eine erste Schwenkrichtung (IV-IV) ermöglichen, die im Wesentlichen senkrecht zu der Ebene ist, die durch die Rahmenrichtung (I-I) und den Achsstift der Radachse, um die sich das besagte mindestens eine Rad (7a-7d) dreht, definiert ist, wobei
- am zweiten Deichselende (9b) die Kupplungsdeichsel (9) am Rahmen (5) angelenkt ist, schwenkbar um eine zweite Schwenkrichtung (V-V), die im Wesentlichen senkrecht zu der durch die Rahmenrichtung (I-I) und den Achsstift der Radachse, um die sich das mindestens eine besagte Rad (7a-7d) dreht, definierten Ebene verläuft,
- Schwenkmittel (11) es ermöglichen, den Rahmen (5) des Anhängers (1) und die Kupplungsdeichsel (9) durch Schwenken selektiv relativ zueinander zu bewegen und die relative Winkelposition (B) des den Rahmen (5) des Anhängers (1) und der Kupplungsdeichsel (9) zu fixieren zwischen einer Transportposition, in der die Rahmenrichtung (I-I) und die Deichselrichtung (III-III) im Wesentlichen parallel sind, und mindestens einer Schneeräumposition, in der die Rahmenrichtung (I-I) und die Deichselrichtung (III-III) zwischen sich einen Winkel (B) bilden, der ungleich Null ist,
- eine Deichselverriegelungsstange (12) mit fester Länge vorgesehen ist, deren eines Ende (12a) an der Kupplungsdeichsel (9) und deren anderes Ende (12b) am Rahmen (5) befestigbar ist um die Kupplungsdeichsel (9) am Rahmen (5) in der Transportstellung zu immobilisieren,
**dadurch gekennzeichnet, dass:**
- der Schneeräumanhänger (1) Erfassungsmittel (13) aufweist, die in der Lage sind, ein Fixierungssignal zu generieren, wenn die Deichselverriegelungsstange (12) an der Kupplungsdeichsel (9) und am Rahmen (5) befestigt ist,
- der Schneeräumanhänger (1) erste Sperrmittel (17) aufweist, die in der Lage sind, die Schwenkmittel (11) zu sperren,
- die ersten Sperrmittel (17) und die Erfassungsmittel (13) so angeordnet sind, dass, wenn die Erfassungsmittel (13) ein Fixierungssignal generieren, die ersten Sperrmittel (17) jede Betätigung der Schwenkmittel (11) verhindern.

2. Schneeräumanhänger (1) nach Anspruch 1, **dadurch gekennzeichnet, dass**:
- die ersten Sperrmittel (17) in der Lage sind, die Orientierungsmittel (8) zu sperren,
- die ersten Sperrmittel (17) und die Erfassungsmittel (13) so angeordnet sind, dass, wenn die Erfassungsmittel (13) ein Fixierungssignal generieren, die ersten Sperrmittel (17) jede Betätigung der Orientierungsmittel (8) verhindern.

3. Schneeräumanhänger (1) nach einem der Ansprüche 1 oder 2, **dadurch gekennzeichnet, dass**:
- das Schneeräumschild (6) am Rahmen (5) schwenkbar angelenkt ist und zwischen einer Ruheposition und einer Arbeitsposition verschiebbar ist durch Verschiebemittel (14) um eine Schildschwenkrichtung (VI-VI), die im Wesentlichen parallel zur Rahmenrichtung (I-I) ist,
- der Schneeräumanhänger (1) zweite Sperrmittel (18) aufweist, die in der Lage sind, die Verschiebemittel (14) zu sperren,
- die zweiten Sperrmittel (18) und die Erfassungsmittel (13) so angeordnet sind, dass, wenn die Erfassungsmittel (13) ein Fixierungssignal generieren, die zweiten Sperrmittel (18) jede Betätigung der Bewegungsmittel (14) verhindern.

4. Schneeräumanhänger (1) nach einem der Ansprüche 1 bis 3, **dadurch gekennzeichnet, dass** die Erfassungsmittel (13) mindestens einen Näherungssensor (13a, 13b) aufweisen, der in der Lage ist, die Präsenz eines Endes (12a, 12b) der Deichselverriegelungsstange (12) auf dem Rahmen (5) und/oder an der Kupplungsdeichsel (9) zu erfassen.

5. Schneeräumanhänger (1) nach Anspruch 4, **dadurch gekennzeichnet, dass** der Näherungssensor (13a, 13b) ein induktiver Sensor oder ein kapazitiver Sensor ist.

6. Schneeräumanordnung (2) aufweisend:
- ein Zugfahrzeug (3),
- einen Schneeräumanhänger (1) nach einem der Ansprüche 1 bis 5,
- Alarmmittel (15), die in der Lage sind, ein für einen in der Führerkabine des Zugfahrzeugs (3) befindlichen Bediener wahrnehmbares Alarmsignal, vorzugsweise ein visuelles Alarmsignal, zu generieren, wenn die Erfassungsmittel (13) ein Fixierungssignal generieren.

## Claims

1. A snow-clearing trailer (1) intended to be towed by a towing vehicle (3) with a towing hitch (4), said snow-clearing trailer (1) having:
- a chassis (5) extending longitudinally in a chassis direction (I-I) and having a snow-clearing blade (6),
- at least one wheel (7a-7d) arranged so as to support the chassis (5) on the ground, an axle of said wheel (7a-7d) being selectively orientable by orientation means (8) between a first wheel position, in which an axis of the axle about which the wheel (7a-7d) rotates is perpendicular to the chassis direction (I-I), and at least a second wheel position, in which the axis of the axle about which the wheel (7a-7d) rotates makes with the chassis direction (I-I) an axle angle (A) that is different from 90°,
- a drawbar (9) extending in a drawbar direction (III-III) between first (9a) and second (9b) drawbar ends,
- at the first drawbar end (9a), first connection means (10) allowing a freely pivoting connection with the towing hitch (4) of the towing vehicle (3) about a first pivoting direction (IV-IV) substantially perpendicular to the plane defined by the chassis direction (I-I) and the axis of the axle about which said at least one wheel (7a-7d) rotates,
wherein:
- at the second drawbar end (9b), the drawbar (9) is articulated to the chassis (5) so as to pivot about a second pivoting direction (V-V) substantially perpendicular to the plane defined by the chassis direction (I-I) and the axis of the axle about which said at least one wheel (7a-7d) rotates,
- pivoting means (11) allow the selective pivoting movement of the chassis (5) of the trailer (1) and the drawbar (9) with respect to one another, and the fixing of the relative angular position (B) of the chassis (5) of the trailer (1) and of the drawbar (9), between a transport position, in which the chassis direction (I-I) and the drawbar direction (III-III) are substantially parallel, and at least one snow-clearing position, in which the chassis direction (I-I) and the drawbar direction (III-III) form a non-zero angle (B) with one another,
- a drawbar locking bar (12) is provided, which has a fixed length, of which one end (12a) can be attached to the drawbar (9) and of which the other end (12b) can be attached to the chassis (5) so as to immobilize the drawbar (9) on the chassis (5) in the transport position,
**characterized in that**:
- the snow-clearing trailer (1) has detection means (13), which are able to generate an attachment signal when the drawbar locking bar (12) is attached to the drawbar (9) and to the chassis (5),
- the snow-clearing trailer (1) has first disabling means (17) that are able to disable the pivoting means (11),
- the first disabling means (17) and the detection means (13) are arranged in such a way that when the detection means (13) generate an attachment signal, the first disabling means (17) prevent any actuation of the pivoting means (11).

2. Snow-clearing trailer (1) according to Claim 1, **characterized in that**:
- the first disabling means (17) are able to disable the orientation means (8),
- the first disabling means (17) and the detection means (13) are arranged in such a way that when the detection means (13) generate an attachment signal, the first disabling means (17) prevent any actuation of the orientation means (8).

3. Snow-clearing trailer (1) according to either of Claims 1 and 2, **characterized in that**:
- the snow-clearing blade (6) is articulated so as to pivot on the chassis (5) and is movable, by movement means (14), about a blade pivoting direction (VI-VI) substantially parallel to the chassis direction (I-I), between a rest position and a working position,
- the snow-clearing trailer (1) has second disabling means (18) that are able to disable the movement means (14),
- the second disabling means (18) and the detection means (13) are arranged in such a way that when the detection means (13) generate an attachment signal, the second disabling means (18) prevent any actuation of the movement means (14).

4. Snow-clearing trailer (1) according to any one of Claims 1 to 3, **characterized in that** the detection means (13) have at least one proximity sensor (13a, 13b) that is able to detect the presence of an end (12a, 12b) of the drawbar locking bar (12) on the chassis (5) and/or on the drawbar (9).

5. Snow-clearing trailer (1) according to Claim 4, **characterized in that** the proximity sensor (13a, 13b) is an inductive sensor or a capacitive sensor.

6. Snow-clearing assembly (2) having:
- a towing vehicle (3),
- a snow-clearing trailer (1) according to any one of Claims 1 to 5,
- alarm means (15), which are able to generate an alarm signal that is perceivable by an operator stationed in the driving cab of the towing vehicle (3), preferably a visual alarm signal, when the detection means (13) generate an attachment signal.
